# EUROPÄISCHE PATENTSCHRIFT

(11) **EP 3 381 878 B1**
(45) Veröffentlichungstag und Bekanntmachung des Hinweises auf die Patenterteilung: **13.05.2026**
(21) Anmeldenummer: 18161984.2
(22) Anmeldetag: 15.03.2018
(51) Int. Cl.: C03C 23/00, C03C 10/00, F24C 15/10

(54) **VERFAHREN ZUR HERSTELLUNG EINER HAUSHALTSGERÄTEPLATTE UND HAUSHALTSGERÄTEPLATTE**
METHOD OF MANUFACTURING A DOMESTIC APPLIANCE PANEL AND DOMESTIC APPLIANCE PANEL
PROCÉDÉ DE FABRICATION D'UNE PLAQUE DE L'APPAREIL ÉLECTROMÉNAGER ET PLAQUE DE L'APPAREIL ÉLECTROMÉNAGER

(30) Priorität: 28.03.2017 ES 201730440
(43) Veröffentlichungstag der Anmeldung: 03.10.2018
(73) Patentinhaber: BSH Hausgeräte GmbH, 81739 München (DE)
(72) Erfinder: Cardenal Orta, Alberto Joaquin, 50009 Zaragoza (ES); Elduque Viñuales, Ana, 22004 Huesca (ES); Gomez Bachiller, Patricia, 50002 Zaragoza (ES); Perez Cabeza, Pilar, 50008 Zaragoza (ES); Romeo Velilla, Rosario, 50008 Zaragoza (ES); Vela Pardos, Noelia, 50018 Zaragoza (ES)

(56) Entgegenhaltungen:
- EP-A1- 3 040 318
- EP-B1- 3 067 334
- WO-A1-2015/044168
- WO-A2-2014/170275
- DE-A1- 19 939 787
- US-A- 3 615 317
- US-A1- 2014 238 971

## Beschreibung

Die Erfindung betrifft ein Verfahren zur Herstellung einer Haushaltsgeräteplatte nach dem Oberbegriff des Anspruchs 1.

Aus dem Stand der Technik sind Rohplatten für Kochfelder bekannt, welche homogene optische Eigenschaften, beispielsweise eine homogene Transparenz und eine homogene Farbe, aufweisen.

Aus WO 2015/044168 A1, WO 2014/170275 A2 und US 3 615 317 A ist jeweils ein Verfahren zur Herstellung einer Haushaltsgeräteplatte, ausgehend von zumindest einer Rohplatte, welche zu wenigstens einem Großteil, insbesondere vollständig, aus einer Glaskeramik besteht, wobei in zumindest einem Verfahrensschritt eine optische Eigenschaft der Rohplatte mittels hochenergetischer elektromagnetischer Strahlung verändert wird, bekannt.

Ferner ist aus DE 199 39 787 A1, US 2014/238971 A1 und EP 3 040 318 A1 jeweils ein Verfahren zur Herstellung einer Haushaltsgeräteplatte, insbesondere einer Kochfeldplatte, ausgehend von zumindest einer Rohplatte, welche zu wenigstens einem Großteil, insbesondere vollständig, aus einer Glaskeramik besteht, wobei in zumindest einem Verfahrensschritt zumindest eine optische Eigenschaft der Rohplatte in wenigstens einem Abschnitt der Rohplatte mittels zumindest einer thermischen Behandlung mittels eines Ofens verändert wird, bekannt.

Weiterhin ist aus EP 3 067 334 B1 ein Verfahren zur Herstellung einer Haushaltsgeräteplatte, insbesondere einer Kochfeldplatte, ausgehend von zumindest einer Rohplatte, welche zu wenigstens einem Großteil, insbesondere vollständig, aus einer Glaskeramik besteht, wobei in zumindest einem Verfahrensschritt zumindest eine optische Eigenschaft einer auf die Rohplatte aufgebrachten Beschichtung mittels einer thermischen Behandlung verändert wird, bekannt.

Die Aufgabe der Erfindung besteht insbesondere darin, eine gattungsgemäße Vorrichtung mit verbesserten Eigenschaften hinsichtlich einer Flexibilität bereitzustellen. Die Aufgabe wird durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Verfahren zur Herstellung einer Haushaltsgeräteplatte, insbesondere einer Kochfeldplatte, ausgehend von zumindest einer Rohplatte, welche zu wenigstens einem Großteil, insbesondere vollständig, aus einer Glaskeramik besteht, wobei in zumindest einem Verfahrensschritt zumindest eine optische Eigenschaft der Rohplatte in wenigstens einem Abschnitt der Rohplatte mittels zumindest einer thermischen Behandlung mittels eines Ofens bei einer Temperatur von zumindest 500°C verändert wird, wobei eine Zeitdauer der thermischen Behandlung von zumindest 10 min und von höchstens 1080 min verwendet wird, wobei zumindest eine als eine Farbe ausgebildete optische Eigenschaft verändert wird, wobei der Abschnitt höchstens 95 % eines Gesamtvolumens der Rohplatte entspricht.

Es wird vorgeschlagen, dass eine als Transparenz ausgebildete optische Eigenschaft in wenigstens einem Abschnitt der Rohplatte, welcher in einem montierten Zustand zur Bereitstellung eines Bedienfelds vorgesehen ist, bei der thermischen Behandlung beibehalten wird.

Hierdurch kann insbesondere eine Flexibilität, insbesondere eine Herstellungsflexibilität, eine Beleuchtungsflexibilität und/oder eine flexible Ausführung eines Herstellungsprodukts, bereitgestellt werden. Ferner kann vorteilhaft eine Effizienz, insbesondere eine Herstellungseffizienz und/oder eine Kosteneffizienz, und/oder eine einfache Herstellung erreicht werden. Zudem kann besonders vorteilhaft eine Haushaltsgeräteplatte hergestellt werden, welche mit einer Vielzahl an Beleuchtungskonfigurationen eingesetzt werden kann. Darüber hinaus kann vorteilhaft eine als Massenprodukt und/oder Zukaufteil verfügbare Rohplatte individuell ausgestaltet werden.

Unter einer "Haushaltsgeräteplatte" soll in diesem Zusammenhang insbesondere zumindest ein insbesondere plattenartiger Teil, insbesondere eine Unterbaugruppe, eines Haushaltsgeräts verstanden werden. Das Haushaltsgerät kann beispielsweise als ein Kältegerät, insbesondere als ein Kühlschrank und/oder als ein Gefrierschrank, oder auch als ein Reinigungsgerät ausgebildet sein. Vorteilhaft ist das Haushaltsgerät jedoch als ein Gargerät, insbesondere als ein Backofen, als eine Mikrowelle, als ein Grillgerät und/oder vorzugsweise als ein Kochfeld, ausgebildet. Das Haushaltsgerät kann mehrere Haushaltsgeräteplatten aufweisen, welche vorteilhaft ein gemeinsames Kochfeld ausbilden.

Besonders vorteilhaft weist das Haushaltsgerät jedoch genau eine Haushaltsgeräteplatte auf. Insbesondere ist die Haushaltsgeräteplatte als ein vorteilhaft flächiges und/oder einstückiges Element ausgebildet, welches dazu vorgesehen ist, in zumindest einem Betriebszustand des Haushaltsgeräts zumindest eine, insbesondere mit dem Haushaltsgerät in Verbindung stehende, Funktion wahrzunehmen. Die Funktion kann dabei eine beliebige Funktion sein, wie beispielweise eine Tragefunktion, eine Lagerfunktion, eine Isolierfunktion, eine Schutzfunktion, eine Dämmfunktion, eine Beleuchtungsfunktion und/oder eine Bedienfunktion. Vorteilhaft ist die Haushaltsgeräteplatte jedoch zu einer Platzierung eines Gargeschirrs vorgesehen. Besonders vorteilhaft weist die Haushaltsgeräteplatte zumindest ein Bedienfeld auf, welches zu einer Bedienung des Haushaltsgeräts durch einen Benutzer vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Ferner soll unter einem "flächigen" Objekt insbesondere ein Objekt verstanden werden, bei welchem eine größte Seitenfläche eines kleinsten, insbesondere gedachten, Quaders, welcher das Objekt gerade noch vollständig umschließt, um zumindest 50 %, vorteilhaft um zumindest 100 %, vorzugsweise um zumindest 200 % und besonders bevorzugt um zumindest 500 % größer als eine jede senkrecht zu der größten Seitenfläche angeordnete Seitenfläche des Quaders ist. Darüber hinaus soll unter "einstückig" insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter "einstückig" aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt.

Unter einer "Rohplatte" soll insbesondere ein vorteilhaft flächig und/oder einstückig ausgebildetes Element verstanden werden, dessen Form und optische Eigenschaften in einem selben Herstellungsprozess definiert wurden. Insbesondere ist der Herstellungsprozess der Rohplatte separat von dem erfindungsgemäßen Verfahren ausgebildet. Vorteilhaft findet eine Abkühlung der Rohplatte zwischen dem Herstellungsprozess und dem erfindungsgemäßen Verfahren statt.. Besonders vorteilhaft ist die Rohplatte als ein, insbesondere massenhaft, kommerziell und/oder günstig verfügbares, Bauteil ausgebildet, welches in dem erfindungsgemäßen Verfahren einer Individualisierung unterzogen wird. Zudem soll unter einer "optischen Eigenschaft" insbesondere eine Transparenz und/oder Transluzenz bzw. Opazität und/oder eine Farbeigenschaft, insbesondere ein Farbton, eine Farbsättigung und/oder eine Farbhelligkeit, verstanden werden. Die optische Eigenschaft kann insbesondere bezüglich einer Reflexion und/oder einer Transmission verschieden ausgebildet sein. Insbesondere ist die optische Eigenschaft eine Materialeigenschaft der Rohplatte und/oder der thermisch behandelten Haushaltsgeräteplatte, welche verschieden von einer Beschichtung der Rohplatte und/oder der thermisch behandelten Haushaltsgeräteplatte ausgebildet ist. Vorteilhaft wird die optische Eigenschaft durch eine innere Struktur, insbesondere eine amorphe Struktur und/oder eine Kristallstruktur, eines Materials, insbesondere einer Glaskeramik, der Rohplatte und/oder der thermisch behandelten Haushaltsgeräteplatte definiert. Des Weiteren ist die thermische Behandlung insbesondere verschieden ausgebildet von einer weiteren thermischen Behandlung in einem formgebenden Herstellungsprozess. Insbesondere wird durch die thermische Behandlung der Abschnitt der Rohplatte und vorteilhaft zumindest eine innere Struktur des Materials des Abschnitts der Rohplatte verändert. Vorteilhaft ist die thermische Behandlung verschieden von einem Beschichtungsprozess, in welchem die Rohplatte beschichtet wird, ausgebildet.

Um eine vorteilhaft flexible Ausführung eines Herstellungsprodukts zu erreichen, wird ferner vorgeschlagen, dass als Rohplatte eine zumindest teilweise transparente und/oder transluzente Rohplatte verwendet wird. Die Rohplatte kann dabei als eine, insbesondere bei einem fehlenden Hintergrundlicht, welches vorteilhaft die Rohplatte transmittiert, schwarz erscheinende Rohplatte ausgebildet sein. Vorteilhaft ist die Rohplatte jedoch als eine farblose Rohplatte ausgebildet. Insbesondere weist die farblose Rohplatte eine höhere Transparenz und/oder eine höhere Transluzenz auf als die schwarz erscheinende Rohplatte.

Des Weiteren wird vorgeschlagen, dass zumindest eine als eine Transparenz und/oder als eine Transluzenz ausgebildete optische Eigenschaft verändert wird. Dadurch kann vorteilhaft eine Herstellungsflexibilität realisiert werden. Insbesondere wird in dem Abschnitt mittels der thermischen Behandlung die Transparenz und/oder die Transluzenz verringert. Ferner wird insbesondere in dem Abschnitt mittels der thermischen Behandlung eine Opazität erhöht. Vorteilhaft ist eine Änderung der Transparenz und/oder eine Änderung der Transluzenz mit einer Temperatur und/oder einer Zeitdauer, vorteilhaft einer Heizzeitdauer, der thermischen Behandlung korreliert.

Insbesondere wird zumindest eine als ein Farbton, als eine Farbsättigung und/oder als eine Farbhelligkeit ausgebildete optische Eigenschaft verändert. Vorteilhaft ist eine Änderung des Farbtons mit einem Material der Rohplatte, einer Temperatur und/oder einer Zeitdauer, vorteilhaft einer Heizzeitdauer, der thermischen Behandlung korreliert.

Darüber hinaus wird vorgeschlagen, dass zumindest eine optische Reflexionseigenschaft der Rohplatte unabhängig von einer optischen Transmissionseigenschaft der Rohplatte verändert wird. Hierdurch kann vorteilhaft eine Herstellungsflexibilität verbessert werden. Unter einer "optischen Reflexionseigenschaft" soll insbesondere eine optische Eigenschaft eines an der Haushaltsgeräteplatte reflektierten Lichts verstanden werden. Vorteilhaft ist die optische Reflexionseigenschaft als eine Reflexionsfarbe, insbesondere ein Reflexionsfarbton, eine Reflexionsfarbsättigung und/oder eine Reflexionsfarbhelligkeit, ausgebildet. Ferner soll unter einer "optischen Transmissionseigenschaft" insbesondere eine optische Eigenschaft eines durch die Haushaltsgeräteplatte transmittierten Lichts verstanden werden. Vorteilhaft ist die optische Transmissionseigenschaft als eine Transparenz, eine Transluzenz und/oder eine Transmissionsfarbe, insbesondere ein Transmissionsfarbton, eine Transmissionsfarbsättigung und/oder eine Transmissionsfarbhelligkeit, ausgebildet.

Insbesondere um eine flexible Änderung der optischen Eigenschaft zu erreichen, wird in einer weiteren Ausgestaltung der Erfindung vorgeschlagen, dass der Abschnitt höchstens 95 %, insbesondere höchstens 85 %, vorteilhaft höchstens 50 % und besonders vorteilhaft höchstens 10 %, eines Gesamtvolumens der Rohplatte entspricht. Insbesondere entspricht der Abschnitt höchstens 95 %, insbesondere höchstens 85 %, vorteilhaft höchstens 50 % und besonders vorteilhaft höchstens 10 %, einer Gesamtfläche der Rohplatte, insbesondere in einer Richtung senkrecht zu einer Haupterstreckungsebene der Rohplatte betrachtet. Besonders vorteilhaft wird die optische Eigenschaft zu einer Markierung zumindest einer Kochstelle verändert.

Erfindungsgemäß wird vorgeschlagen, dass zur thermischen Behandlung eine Temperatur von zumindest 500°C, insbesondere von zumindest 900°C und vorteilhaft von zumindest 1000°C, verwendet wird. Dadurch kann vorteilhaft eine Herstellungseffizienz und/oder eine Kosteneffizienz ermöglicht werden.

Erfindungsgemäß wird vorgeschlagen, dass eine Zeitdauer, insbesondere eine Heizzeitdauer, der thermischen Behandlung von zumindest 10 min, insbesondere von zumindest 20 min und vorteilhaft von zumindest 30 min, und von höchstens 1080 min, insbesondere von höchstens 540 min und vorteilhaft von höchstens 360 min, verwendet wird. Hierdurch kann eine vorteilhafte Änderung der optischen Eigenschaft erreicht werden.

Ferner wird eine Haushaltsgeräteplatte, insbesondere eine Kochfeldplatte, vorgeschlagen, welche ausgehend von einer Rohplatte mit dem vorhergehenden Verfahren hergestellt wurde. Zudem wird ein Haushaltsgerät, insbesondere ein Kochfeld, mit einer derart hergestellten Haushaltsgeräteplatte vorgeschlagen. Hierdurch kann insbesondere eine Flexibilität, insbesondere eine Herstellungsflexibilität, eine Beleuchtungsflexibilität und/oder eine flexible Ausführung eines Herstellungsprodukts, bereitgestellt werden. Ferner kann vorteilhaft eine Effizienz, insbesondere eine Herstellungseffizienz und/oder eine Kosteneffizienz, und/oder eine einfache Herstellung erreicht werden. Zudem kann besonders vorteilhaft eine Haushaltsgeräteplatte hergestellt werden, welche mit einer Vielzahl an Beleuchtungskonfigurationen eingesetzt werden kann. Darüber hinaus kann vorteilhaft eine als Massenprodukt und/oder Zukaufteil verfügbare Rohplatte individuell ausgestaltet werden. Ferner könnte das Haushaltsgerät zumindest eine weitere Haushaltsgeräteplatte aufweisen, welche mit der Haushaltsgeräteplatte, insbesondere zu einem Kochfeld, kombiniert wird. Vorteilhaft sind die Haushaltsgeräteplatte und die weitere Haushaltsgeräteplatte, insbesondere in einer Richtung senkrecht zu einer Haupterstreckungsebene der Haushaltsgeräteplatte betrachtet, nebeneinander angeordnet.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf ein beispielhaft als Kochfeld ausgebildetes Haushaltsgerät mit einer Haushaltsgeräteplatte und
- Fig. 2: ein beispielhaftes Ablaufdiagramm eines Verfahrens zur Herstellung der Haushaltsgeräteplatte.

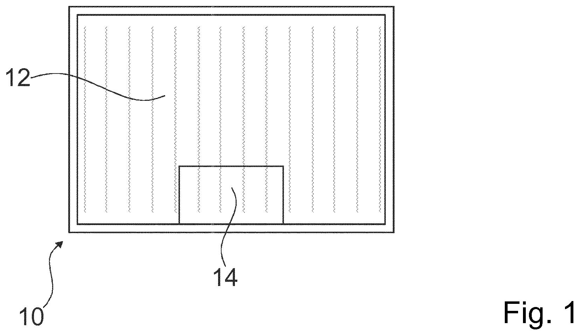

Figur 1 zeigt zumindest einen Teil eines beispielhaft als Gargerät ausgebildeten Haushaltsgeräts 10 in einer schematischen Darstellung. Im vorliegenden Fall ist das Haushaltsgerät 10 als ein Kochfeld ausgebildet.

Das Haushaltsgerät 10 weist eine Haushaltsgeräteplatte 12 auf. Im vorliegenden Fall ist die Haushaltsgeräteplatte 12 als eine Kochfeldplatte ausgebildet. Die Haushaltsgeräteplatte 12 ist einstückig ausgebildet. Ferner ist eine Haupterstreckungsebene der Haushaltsgeräteplatte 12 in einer Einbaulage senkrecht zu der Schwerkraftrichtung angeordnet. Die Haushaltsgeräteplatte 12 umfasst ein Bedienfeld 14. Das Bedienfeld 14 ist in zumindest einem Betriebszustand zu einer Bedienung des Haushaltsgeräts 10 durch einen Benutzer vorgesehen.

Ferner weist das Haushaltsgerät 10 eine Heizeinheit (nicht gezeigt) auf. Die Heizeinheit ist in Figur 1 durch die Haushaltsgeräteplatte 12 verdeckt. Die Heizeinheit ist in zumindest einem Betriebszustand des Haushaltsgeräts 10 dazu vorgesehen, ein auf der Haushaltsgeräteplatte 12 befindliches Gargeschirr (nicht gezeigt) zu erhitzen. Des Weiteren umfasst das Haushaltsgerät 10 eine Beleuchtungseinheit (nicht gezeigt). Die Beleuchtungseinheit ist in Figur 1 durch die Haushaltsgeräteplatte 12 verdeckt. Die Beleuchtungseinheit ist in zumindest einem Betriebszustand des Haushaltsgeräts 10 dazu vorgesehen, die Haushaltsgeräteplatte 12 zu durchleuchten.

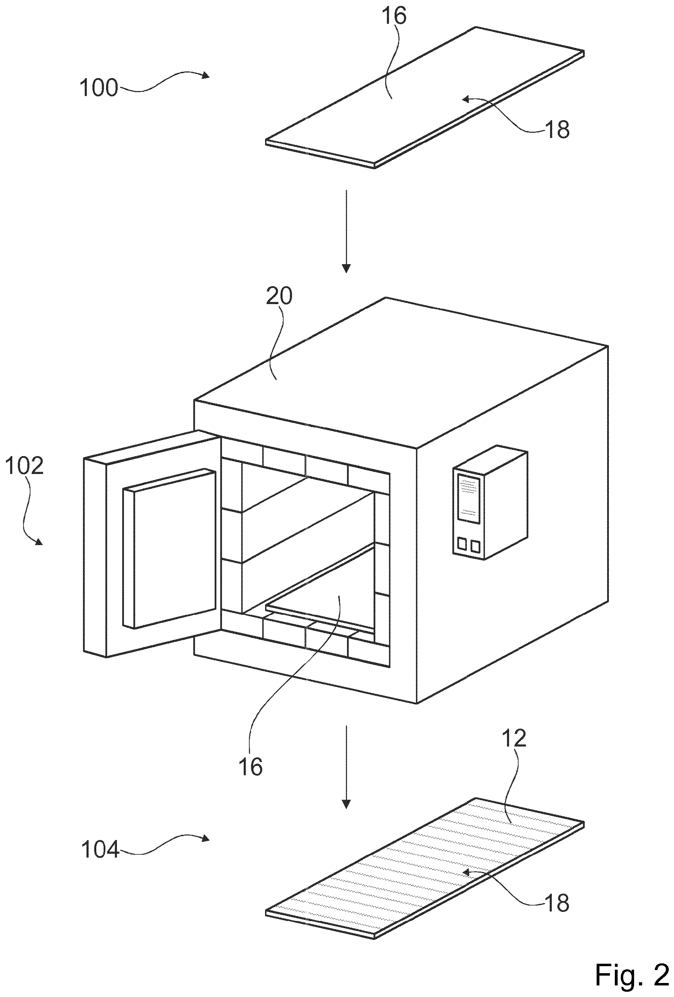

Figur 2 zeigt ein beispielhaftes Ablaufdiagramm eines Verfahrens zur Herstellung der Haushaltsgeräteplatte 12. In einem Verfahrensschritt 100 geht das Verfahren aus von einer Rohplatte 16. Die Rohplatte 16 ist flächig ausgebildet. Ferner ist die Rohplatte 16 einstückig ausgebildet. Die Rohplatte 16 besteht im vorliegenden Fall vollständig aus einer Glaskeramik. Eine Form und optische Eigenschaften der Rohplatte 16 sind durch einen von dem vorliegenden Verfahren separat ausgebildeten Herstellungsprozess vorgegeben. Im vorliegenden Fall ist die Rohplatte 16 als eine beispielsweise von einem Zulieferer, insbesondere einem Glaszulieferer, kommerziell erhältliche Rohplatte 16 ausgebildet.

In einem Verfahrensschritt 102 wird aus der Rohplatte 16 die Haushaltsgeräteplatte 12 erzeugt. In dem Verfahrensschritt 102 wird zumindest eine optische Eigenschaft der Rohplatte 16 in einem Abschnitt 18 der Rohplatte 16 mittels einer thermischen Behandlung verändert, wobei der Abschnitt höchstens 95 % eines Gesamtvolumens einer Rohplatte umfasst Zudem könnte eine optische Eigenschaft eines Abschnitts einer Rohplatte inhomogen verändert werden.

Die optische Eigenschaft wird in dem Abschnitt 18 mittels eines Ofens 20 verändert. Der Ofen 20 ist als ein Brennofen ausgebildet. Zur thermischen Behandlung des Abschnitts 18 wird eine Temperatur von zumindest 800°C, im vorliegenden Fall von zumindest 900°C, verwendet. Es wird eine Zeitdauer der thermischen Behandlung von zumindest 10 min, im vorliegenden Fall von zumindest 30 min, verwendet. Ferner wird eine Zeitdauer der thermischen Behandlung von höchstens 1080 min, im vorliegenden Fall von höchstens 360 min, verwendet. Es ist auch möglich thermisch Behandeln in der Zeit mit Anfangstemperaturen von etwa 500°C versetzt angeordnet und steigen.

Wird als Rohplatte 16 eine transparente Rohplatte verwendet, so wird in dem Verfahrensschritt 102 in dem Abschnitt 18 der Rohplatte 16 eine als eine Transparenz ausgebildete optische Eigenschaft verändert. Im vorliegenden Fall wird die Transparenz in dem Abschnitt 18 mittels der thermischen Behandlung verringert. Zudem wird in dem Abschnitt 18 mittels der thermischen Behandlung eine Opazität erhöht. Die Änderung der Transparenz ist mit einer Temperatur und mit einer Zeitdauer der thermischen Behandlung korreliert. Alternativ könnte als eine Rohplatte eine transluzente, insbesondere diffus streuende, oder eine lichtundurchlässige Rohplatte verwendet werden.

Ferner wird in dem Verfahrensschritt 102 in dem Abschnitt 18 der Rohplatte 16 eine als eine Farbe ausgebildete weitere optische Eigenschaft verändert. Die Änderung der Farbe ist mit einem Material der Rohplatte 16, mit einer Temperatur und mit einer Zeitdauer der thermischen Behandlung korreliert. Zudem wird eine optische Reflexionseigenschaft der Rohplatte 16 unabhängig von einer optischen Transmissionseigenschaft der Rohplatte 16 verändert. Im vorliegenden Fall ist die optische Reflexionseigenschaft als eine Reflexionsfarbe eines von der Rohplatte 16 reflektierten Lichts ausgebildet. Darüber hinaus ist die optische Transmissionseigenschaft als eine Transmissionsfarbe eines die Rohplatte 16 durchdringenden Lichts ausgebildet. Alternativ könnten eine optische Reflexionseigenschaft einer Rohplatte in Abhängigkeit einer optischen Transmissionseigenschaft der Rohplatte verändert werden.

In einem Verfahrensschritt 104 wird die thermisch behandelte Haushaltsgeräteplatte 12 abgekühlt.

Eine Zusammenstellung von beispielhaften Herstellungsparametern, sowie von damit korrelierten optischen Reflexions- und Transmissionseigenschaften der Rohplatte 16 und/oder der thermisch behandelten Haushaltsgeräteplatte 12 kann der folgenden Tabelle entnommen werden.

| Rohplatte 16 | | Thermische Behandlung | | Haushaltsgeräteplatte 12 | |
|---|---|---|---|---|---|
| Reflexionsfarbe | Transmissionsfarbe | Temperatur in °C | Zeitdauer in min | Reflexionsfarbe | Transmissionsfarbe |
| farblos (transparent) | farblos | 900 | 360 | farblos (transluzent) | gelb-orange |
| farblos (transparent) | farblos | 1000 | 30 | weiß | orange |
| schwarz | orange-braun | 900 | 360 | dunkelgrau | rosa-braun |
| schwarz | orange-braun | 1000 | 30 | violett | rosa-orange |
| schwarz | orange-braun | 1000 | >60 | helles violettgrau | orange |
| schwarz | rosa | 1000 | 30 | violett | rosa-orange |
| schwarz | rosa | 1000 | >60 | hellviolett | orange |
| schwarz | orange | 1000 | 60 | hellgrau | orange |

### Bezugszeichen

- 10: Haushaltsgerät
- 12: Haushaltsgeräteplatte
- 14: Bedienfeld
- 16: Rohplatte
- 18: Abschnitt
- 20: Ofen
- 100: Verfahrensschritt
- 102: Verfahrensschritt
- 104: Verfahrensschritt

## Patentansprüche

1. Verfahren zur Herstellung einer Haushaltsgeräteplatte (12), insbesondere einer Kochfeldplatte, ausgehend von zumindest einer Rohplatte (16), welche zu wenigstens einem Großteil, insbesondere vollständig, aus einer Glaskeramik besteht, wobei in zumindest einem Verfahrensschritt (102) zumindest eine optische Eigenschaft der Rohplatte (16) in wenigstens einem Abschnitt (18) der Rohplatte (16) mittels zumindest einer thermischen Behandlung mittels eines Ofens (20) bei einer Temperatur von zumindest 500°C verändert wird, wobei eine Zeitdauer der thermischen Behandlung von zumindest 10 min und von höchstens 1080 min verwendet wird, wobei zumindest eine als eine Farbe ausgebildete optische Eigenschaft verändert wird, wobei der Abschnitt (18) höchstens 95 % eines Gesamtvolumens der Rohplatte (16) entspricht, **dadurch gekennzeichnet, dass** eine als Transparenz ausgebildete optische Eigenschaft in wenigstens einem Abschnitt der Rohplatte (16), welcher in einem montierten Zustand zur Bereitstellung eines Bedienfelds (14) vorgesehen ist, bei der thermischen Behandlung beibehalten wird.

2. Verfahren nach Anspruch 1, **dadurch gekennzeichnet, dass** als Rohplatte (16) eine zumindest teilweise transparente und/oder transluzente Rohplatte verwendet wird.

3. Verfahren nach Anspruch 1 oder 2, **dadurch gekennzeichnet, dass** zumindest eine als eine Transparenz und/oder als eine Transluzenz ausgebildete optische Eigenschaft verändert wird.

## Claims

1. Method for producing a household appliance plate (12), in particular a hob plate, starting from at least one raw plate (16), which consists, at least to a large extent, in particular completely, of glass-ceramic, wherein, in at least one method step (102), at least one optical property of the raw plate (16) in at least one section (18) of the raw plate (16) is altered by means of at least one thermal treatment by means of a furnace (20) at a temperature of at least 500 °C, wherein a duration of the thermal treatment lasts for at least 10 min and at most 1080 min, wherein at least one optical property embodied as a colour is altered, wherein the section (18) corresponds at most to 95 % of a total volume of the raw plate (16), **characterised in that** an optical property embodied as transparency is retained as part of the thermal treatment in at least one section of the raw plate (16), which section, in the assembled state, is intended for providing a control panel (14).

2. Method according to claim 1, **characterised in that** at least one partially transparent and/or translucent raw plate is used as the raw plate (16).

3. Method according to claim 1 or 2, **characterised in that** at least one optical property embodied as a transparency and/or as a translucency is altered.

## Revendications

1. Procédé de fabrication d'une plaque pour appareils ménagers (12), en particulier une plaque de cuisson, à partir d'au moins une plaque brute (16) qui est constituée au moins en grande partie, en particulier entièrement, d'une vitrocéramique, dans lequel, dans au moins une étape de procédé (102), au moins une propriété optique de la plaque brute (16) est modifiée dans au moins une section (18) de la plaque brute (16) au moyen d'au moins un traitement thermique à l'aide d'un four (20) à une température d'au moins 500 °C, dans lequel une durée du traitement thermique d'au moins 10 minutes et d'au plus 1080 minutes est employée, dans lequel au moins une propriété optique réalisée sous forme de couleur est modifiée, dans lequel la section (18) correspond au plus à 95 % d'un volume total de la plaque brute (16), **caractérisé en ce qu'**une propriété optique réalisée sous forme de transparence dans au moins une partie de la plaque brute (16), qui est prévue pour fournir dans un état monté un panneau de commande (14), est conservée lors du traitement thermique.

2. Procédé selon la revendication 1, **caractérisé en ce qu'**une plaque brute au moins partiellement transparente et/ou translucide est utilisée comme plaque brute (16).

3. Procédé selon la revendication 1 ou 2, **caractérisé en ce qu'**au moins une propriété optique réalisée sous forme de transparence et/ou de translucidité est modifiée.
